# EUROPÄISCHE PATENTANMELDUNG

(11) **EP 1 598 541 A2**
(43) Veröffentlichungstag der Anmeldung: **23.11.2005**
(21) Anmeldenummer: 05102108.7
(22) Anmeldetag: 17.03.2005
(51) Int. Cl.: F02D 41/30, F02D 41/00, F02D 13/02, F02D 21/08

(54) **Verfahren zum Betreiben einer Brennkraftmaschine**

(30) Priorität: 18.05.2004 DE 102004024568
(71) Anmelder: ROBERT BOSCH GMBH, 70442 Stuttgart (DE)
(72) Erfinder: Seils, Wolfgang, 71640, Ludwigsburg (DE)

(57) **Zusammenfassung**

Die vorliegenden Erfindung betrifft ein Verfahren zum Betreiben einer Brennkraftmaschine (1) mit Ladungsschichtung in einem Brennraum (4) der Brennkraftmaschine (1), bei dem Abgas (A) in den Brennraum (4) zurückgeführt wird. Das Verfahren ist dadurch gekennzeichnet, dass das Abgas (A) in den Brennraum (4) während eines ersten Zeitraumes eingebracht wird, und das das Frischgas (F) während eines zweiten Zeitraumes in den Brennraum (4) eingebracht wird, wobei der zweite Zeitraum im Wesentlichen vom ersten Zeitraum verschieden ist.

Hierdurch ergibt sich eine besonders vorteilhafte Ladungsschichtung in dem Brennraum (4), die aus einem das Abgas umfassenden Inertgasbereich und einem weiteren Bereich besteht, der Frischgas und/oder ein Gemisch aus Frischgas und Kraftstoff enthält und somit zündfähig ist.

Die Trennung der beiden Bereiche (vgl. Fig. 3b) wird dadurch erreicht, dass das Abgas (A) sowie auch das Frischgas (F) beim Einbringen (100/110) in den Brennraum (4) einen Drall um eine Rotationsachse erhält, die sich im Wesentlichen parallel zur Bewegungsrichtung des Kolbens (2) erstreckt.

## Beschreibung

Die vorliegende Erfindung betrifft ein Verfahren zum Betreiben einer Brennkraftmaschine mit Ladungsschichtung in einem Brennraum der Brennkraftmaschine, bei dem Abgas in den Brennraum zurückgeführt wird.

Die vorliegende Erfindung betrifft ferner eine Brennkraftmaschine mit Ladungsschichtung in einem Brennraum, bei der Abgas in den Brennraum zurückführbar ist, sowie ein Steuergerät für eine Brennkraftmaschine mit Ladungsschichtung in einem Brennraum, bei der Abgas in den Brennraum zurückführbar ist und ein Computerprogramm für ein derartiges Steuergerät.

### Stand der Technik

Es sind verschiedene Betriebsverfahren bzw. Betriebsarten für Brennkraftmaschinen bekannt, welche sich u.a. durch eine räumliche Verteilung des Luft-/Kraftstoffgemisches im Brennraum voneinander unterscheiden.

Beispielsweise ist ein sogenannter Homogenbetrieb insbesondere von direkteinspritzenden Brennkraftmaschinen bekannt, bei dem im gesamten Brennraum ein homogenes zündfähiges Luft-/Kraftstoffgemisch vorliegt, was z.B. durch eine bereits im Ansaugtakt des entsprechenden Zylinders erfolgende Kraftstoffeinspritzung und eine dementsprechend starke Verwirbelung des eingespritzten Kraftstoffs bewirkt wird. Der Homogenbetrieb ist aufgrund des üblicherweise stöchiometrischen Luft-/Kraftstoffverhältnisses durch eine geringe Schadstoffemission gekennzeichnet und wird aufgrund der Ausnutzung des gesamten Brennraums für die Verbrennung vorwiegend für Situationen gewählt, in denen eine hohe Drehmomentanforderung besteht. Die Verbrennung selbst entspricht dabei weitgehend den Verhältnissen bei der Saugrohreinspritzung.

Eine weitere bekannte Betriebsart ist der sogenannte Schichtbetrieb, bei dem im Ansaugtakt Luft in den Brennraum angesaugt wird, und erst im Verdichtungstakt, d.h. kurz vor dem Zündzeitpunkt, eine Kraftstoffeinspritzung erfolgt. Dadurch wird eine Verteilung des eingespritzten Kraftstoffs im gesamten Brennraum vermieden, während sich jedoch in einem Bereich um die Zündkerze ein zündfähiges Gemisch befindet. Über den gesamten Brennraum gemittelt stellt sich beim Schichtbetrieb ein im Verhältnis zum Homogenbetrieb sehr mageres Gemisch ein, was sich einerseits günstig auf den Kraftstoffverbrauch auswirkt, andererseits jedoch zu einer deutlich erhöhten Bildung von Stickoxiden (NOₓ) führt.

Der verstärkten Stickoxidbildung im Schichtbetrieb versucht man bei herkömmlichen Betriebsverfahren durch eine Verringerung des Luft- bzw. Sauerstoffüberschusses im Brennraum zu begegnen, z.B. durch eine Abgasrückführung, die zu einer Reduktion der Verbrennungstemperatur und somit zu einer Senkung der temperaturabhängigen Bildung von Stickoxiden führt.

Ferner sind Verfahren zur katalytischen Nachbehandlung von Abgasen mit hohem Stickoxidanteil mittels sogenannter NOₓ-Speicherkatalysatoren bekannt, die jedoch regelmäßig regeneriert und desulfatiert werden müssen, was insbesondere über eine verbrennungsgesteuerte Aufheizung des Katalysators erfolgt und den Kraftstoffverbrauch wiederum erhöht.

Es ist Aufgabe der vorliegenden Erfindung, ein gattungsgemäßes Betriebsverfahren sowie eine Brennkraftmaschine und ein Steuergerät hierfür derart weiterzuentwickeln, dass ein zuverlässiger und zugleich kraftstoffsparender Betrieb der Brennkraftmaschine gewährleistet ist.

Diese Aufgabe wird bei einem Betriebsverfahren der eingangs genannten Art erfindungsgemäß dadurch gelöst, dass während eines ersten Zeitraumes Abgas in den Brennraum der Brennkraftmaschine eingebracht wird, und dass während eines zweiten Zeitraumes, der von dem ersten Zeitraum im Wesentlichen verschieden ist, Frischgas in den Brennraum der Brennkraftmaschine eingebracht wird.

### Vorteile der Erfindung

Hierdurch ergibt sich in besonders vorteilhafter Weise eine Ladungsschichtung im Brennraum, wobei eine erste Ladungsschicht im Wesentlichen durch das bezüglich der Verbrennung als Inertgas fungierende Abgas gebildet ist, und wobei eine zweite Ladungsschicht durch das vorzugsweise zeitlich nach dem Einbringen des Abgases in den Brennraum zugeführte Frischgas gebildet ist.

Damit ist es möglich, einen über den gesamten Brennraum gemittelten höheren Inertgasanteil als bei den herkömmlichen Betriebsarten zu erzielen, ohne die Zündfähigkeit negativ zu beeinflussen, wodurch sich insbesondere Vorteile hinsichtlich des Wirkungsgrads der Brennkraftmaschine und eine deutliche Kraftstoffeinsparung ergeben.

Eine ganz besonders vorteilhafte Ausführungsform der vorliegenden Erfindung ist dadurch gekennzeichnet, dass das Abgas beim Einbringen in den Brennraum einen Drall um eine Rotationsachse erhält, die sich im Wesentlichen parallel zur Bewegungsrichtung eines sich im Brennraum hin- und herbewegenden Kolbens erstreckt, und/oder dass das Frischgas beim Einbringen in den Brennraum einen Drall um eine Rotationsachse erhält, die sich im Wesentlichen parallel zur Bewegungsrichtung eines sich im Brennraum hin-und herbewegenden Kolbens erstreckt.

Laboruntersuchungen haben ergeben, dass eine Beaufschlagung des eingebrachten Abgases bzw. des Frischgases mit einem derartigen Drall stabilisierend auf die jeweilige Ladungsschicht wirkt, so dass die Ladungsschicht länger im Brennraum bestehen bleibt, als eine nicht mit einem Drall beaufschlagte Ladungsschicht. Die Untersuchungsergebnisse zeigen auch, dass in vorstehend genannter Weise mit einem Drall beaufschlagte Ladungsschichten sogar bis zu einem Zündzeitpunkt bestehen bleiben.

Ganz besonders vorteilhaft ist es gemäß einer weiteren Ausführungsform der vorliegenden Erfindung, dass der Drall des Abgases denselben Drehsinn aufweist wie der Drall des Frischgases, was eine ganz besonders hohe Stabilität der jeweiligen Ladungsschicht bis hin zum Zündzeitpunkt bewirkt. Dadurch ist insgesamt nur eine sehr geringe Vermischung von Inertgas und Frischgas gegeben, so dass die Zündfähigkeit des ggf. mit Kraftstoff versetzten Frischgases nicht durch die aus Inertgas bestehende Ladungsschicht beeinträchtigt ist.

Gleichzeitig kann auf diese Weise eine über den gesamten Brennraum gemittelte höhere Inertgasrate eingestellt werden als bei herkömmlichen Betriebsarten. Dadurch wird der Wirkungsgrad der Brennkraftmaschine verbessert und der Kraftstoffverbrauch abgesenkt. Die Abkühlung des Brennraums durch das Inertgas führt darüber hinaus zu einer Verminderung des Stickoxidanteils im Abgas.

Bei dem erfindungsgemäßen Verfahren ist noch eine weitere Steigerung des Wirkungsgrades der Brennkraftmaschine dadurch gegeben, dass die Ladungsschicht aus Inertgas eine Isolationswirkung aufweist, welche insbesondere die Wandwärmeverluste bei der Verbrennung reduziert.

Gemäß einer weiteren vorteilhaften Ausführungsform der vorliegenden Erfindung wird anstelle des Frischgases ein Gemisch aus Frischgas und Kraftstoff während des zweiten Zeitraumes in den Brennraum eingebracht, so dass eine Beimengung von Kraftstoff durch eine im Brennraum vorgesehene Einspritzvorrichtung nicht erforderlich ist.

Ganz besonders vorteilhaft wird das Abgas gemäß einer weiteren Variante der vorliegenden Erfindung durch mindestens ein Auslassventil der Brennkraftmaschine in den Brennraum eingebracht. Hierdurch wird das Problem einer Vermischung des Abgases mit Frischgas umgangen, welches sich bei der bekannten sog. externen Abgasrückführung ergibt, bei der das Abgas aus dem Abgastrakt in einen Ansaugtrakt der Brennkraftmaschine gelangt und sich dort mit Frischgas vermischen kann.

Gemäß einer weiteren vorteilhaften Ausführungsform des erfindungsgemäßen Verfahrens wird der Drall des Abgases bei einem Zylinder mit mehreren Auslassventilen durch eine vorzugsweise unterschiedliche Ansteuerung der mehreren Auslassventile erzeugt.

Unter einer unterschiedlichen Ansteuerung wird in diesem Zusammenhang jede Ansteuerung der mehreren Auslassventile verstanden, die geeignet ist, eine erfindungsgemäße Drallbildung bei dem in den Brennraum einströmenden Abgas hervorzurufen. Beispielsweise kann nur eines der mehreren Auslassventile zu derjenigen Zeit des Ansaugtakts geöffnet werden, zu der erfindungsgemäß das Abgas in den Brennraum eingebracht bzw. angesaugt wird.

Eine derartige unterschiedliche Ansteuerung ist bei Brennkraftmaschinen mit zwei Auslassnockenwellen beispielsweise durch Spätverstellen einer dieser Auslassnockenwellen möglich. Sehr einfach lässt sich die vorstehend genannte unterschiedliche Ansteuerung auch mit Einzelventilansteuerungen realisieren.

Bei Brennkraftmaschinen mit einer Auslassnockenwelle und einem Auslassventil je Zylinder ist eine Spätverstellung der Auslassnockenwelle ausreichend, um ein Ansaugen von Abgas in den Brennraum zu erzielen.

Eine weitere sehr vorteilhafte Variante des erfindungsgemäßen Verfahrens sieht vor, dass der Drall des Abgases durch ein Maskieren eines Auslassventils erzeugt wird. Unter Maskieren eines Auslassventils wird in diesem Zusammenhang jede Veränderung eines Öffnungsquerschnitts eines Ventilspalts des Auslassventils verstanden, die geeignet ist, eine Drallbildung im oben genannten Sinne zu fördern.

Gemäß einer weiteren vorteilhaften Ausbildung der vorliegenden Erfindung wird der Drall des Frischgases oder des Gemisches aus Frischgas und Kraftstoff durch ein Maskieren mindestens eines Einlassventils der Brennkraftmaschine und/oder bei einem Zylinder mit mehreren Einlassventilen durch eine vorzugsweise unterschiedliche Ansteuerung der mehreren Einlassventile erzeugt.

Als eine weitere Lösung der Aufgabe der vorliegenden Erfindung ist bei einer gattungsgemäßen Brennkraftmaschine und bei einem gattungsgemäßen Steuergerät vorgeschlagen, dass während eines ersten Zeitraums Abgas in den Brennraum einbringbar ist, und dass während eines zweiten Zeitraums, der von dem ersten Zeitraum im Wesentlichen verschieden ist, Frischgas in den Brennraum einbringbar ist.

Noch eine weitere Lösung der Aufgabe der vorliegenden Erfindung ist in Form eines Computerprogramms für ein gattungsgemäßes Steuergerät angegeben.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Figur 1: zeigt schematisch eine erfindungsgemäße Brennkraftmaschine,
- Figur 2: zeigt ein Flussdiagramm eines erfindungsgemäßen Verfahrens,
- Figur 3a: zeigt eine Ausführungsform der erfindungsgemäßen Brennkraftmaschine in einem ersten Betriebszustand, und
- Figur 3b: zeigt die erfindungsgemäße Brennkraftmaschine aus Figur 3a in einem zweiten Betriebszustand.

### Beschreibung der Ausführungsbeispiele

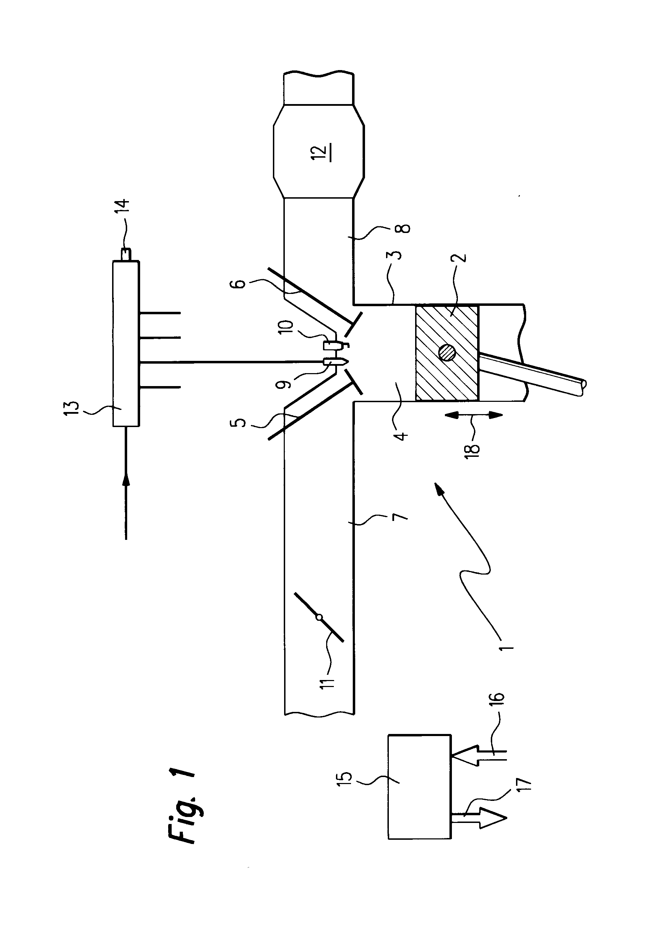

In der Figur 1 ist eine Brennkraftmaschine 1 eines Kraftfahrzeugs dargestellt, bei der ein Kolben 2 in einem Zylinder 3 längs einer durch einen Doppelpfeil 18 angedeuteten Bewegungsrichtung hin- und herbewegbar ist. Der Zylinder 3 ist mit einem Brennraum 4 versehen, der unter anderem durch den Kolben 2, ein Einlassventil 5 und ein Auslassventil 6 begrenzt ist. Mit dem Einlassventil 5 ist ein Ansaugrohr 7 und mit dem Auslassventil 6 ist ein Abgasrohr 8 gekoppelt.

Im Bereich des Einlassventils 5 und des Auslassventils 6 ragen ein Einspritzventil 9 und eine Zündkerze 10 in den Brennraum 4. Über das Einspritzventil 9 kann Kraftstoff in den Brennraum 4 eingespritzt werden. Mit der Zündkerze 10 kann der Kraftstoff in dem Brennraum 4 entzündet werden.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11. In dem Abgasrohr 8 ist ein Katalysator 12 untergebracht, der der Reinigung der durch die Verbrennung des Kraftstoffs entstehenden Abgase dient.

Das Einspritzventil 9 ist über eine Druckleitung mit einem Kraftstoffspeicher 13 verbunden. In entsprechender Weise sind auch die Einspritzventile der anderen Zylinder der Brennkraftmaschine 1 mit dem Kraftstoffspeicher 13 verbunden. Der Kraftstoffspeicher 13 wird über eine Zuführleitung mit Kraftstoff versorgt. Hierzu ist eine Kraftstoffpumpe vorgesehen, die dazu geeignet ist, den erwünschten Druck in dem Kraftstoffspeicher 13 aufzubauen.

Weiterhin ist an dem Kraftstoffspeicher 13 ein Drucksensor 14 angeordnet, mit dem der Druck in dem Kraftstoffspeicher 13 messbar ist. Bei diesem Druck handelt es sich um denjenigen Druck, der auf den Kraftstoff ausgeübt wird, und mit dem deshalb der Kraftstoff über das Einspritzventil 9 in den Brennraum 3 der Brennkraftmaschine 1 eingespritzt wird.

Im Betrieb der Brennkraftmaschine 1 wird Kraftstoff in den Kraftstoffspeicher 13 gefördert. Dieser Kraftstoff wird über die Einspritzventile 9 der einzelnen Zylinder 3 in die zugehörigen Brennräume 4 eingespritzt. Die eingespritzte Kraftstoffmenge hängt dabei im wesentlichen von der Einspritzzeit und von dem Kraftstoffdruck im Kraftstoffspeicher 13 ab.

Mit Hilfe der Zündkerzen 10 werden Verbrennungen in den Brennräumen 3 erzeugt, durch die die Kolben 2 in eine Hin-und Herbewegung versetzt werden. Diese Bewegungen werden auf eine nicht dargestellte Kurbelwelle übertragen und üben auf diese ein Drehmoment aus.

Ein Steuergerät 15 ist von Eingangssignalen 16 beaufschlagt, die mittels Sensoren gemessene Betriebsgrößen der Brennkraftmaschine 1 darstellen. Beispielsweise ist das Steuergerät 15 mit dem Drucksensor 14, einem Luftmassensensor, einem Drehzahlsensor und dergleichen verbunden. Des Weiteren ist das Steuergerät 15 mit einem Fahrpedalsensor verbunden, der ein Signal erzeugt, das die Stellung eines von einem Fahrer betätigbaren Fahrpedals und damit das angeforderte Drehmoment angibt.

Das Steuergerät 15 erzeugt Ausgangssignale 17, mit denen über Aktoren bzw. Steller das Verhalten der Brennkraftmaschine 1 beeinflusst werden kann. Beispielsweise ist das Steuergerät 15 mit dem Einspritzventil 9, der Zündkerze 10 und einem den Kraftstoffdruck im Kraftstoffspeicher 13 steuernden Druckstellglied (nicht gezeigt) und dergleichen verbunden und erzeugt die zu deren Ansteuerung erforderlichen Signale.

Unter anderem ist das Steuergerät 15 dazu vorgesehen, die Betriebsgrößen der Brennkraftmaschine 1 zu steuern und/oder zu regeln. Beispielsweise wird die von dem Einspritzventil 9 in den Brennraum 4 eingespritzte Kraftstoffmasse von dem Steuergerät 15 insbesondere im Hinblick auf einen geringen Kraftstoffverbrauch und/oder eine geringe Schadstoffentwicklung gesteuert und/oder geregelt.

Zu diesem Zweck ist das Steuergerät 15 mit einem Mikroprozessor versehen, der in einem Speichermedium, insbesondere in einem Flash-Memory ein Computerprogramm abgespeichert hat, das dazu geeignet ist, die genannte Steuerung und/oder Regelung durchzuführen.

In einer Betriebsart der Brennkraftmaschine 1 wird eine sog. Ladungsschichtung vorgenommen, bei der in einem ersten Zeitraum Inertgas in den Brennraum 4 des Zylinders 3 eingebracht wird. In einem zweiten Zeitraum, der sich vorzugsweise an den ersten Zeitraum anschließt, wird Frischgas in den Brennraum 4 eingebracht. Dabei erfolgt das Beschicken des Brennraums 4 mit dem Inertgas und dem Frischgas erfindungsgemäß dergestalt, dass bis zu einem folgenden Zündzeitpunkt keine bzw. eine möglichst geringe Vermischung von Inertgas und Frischgas stattfindet.

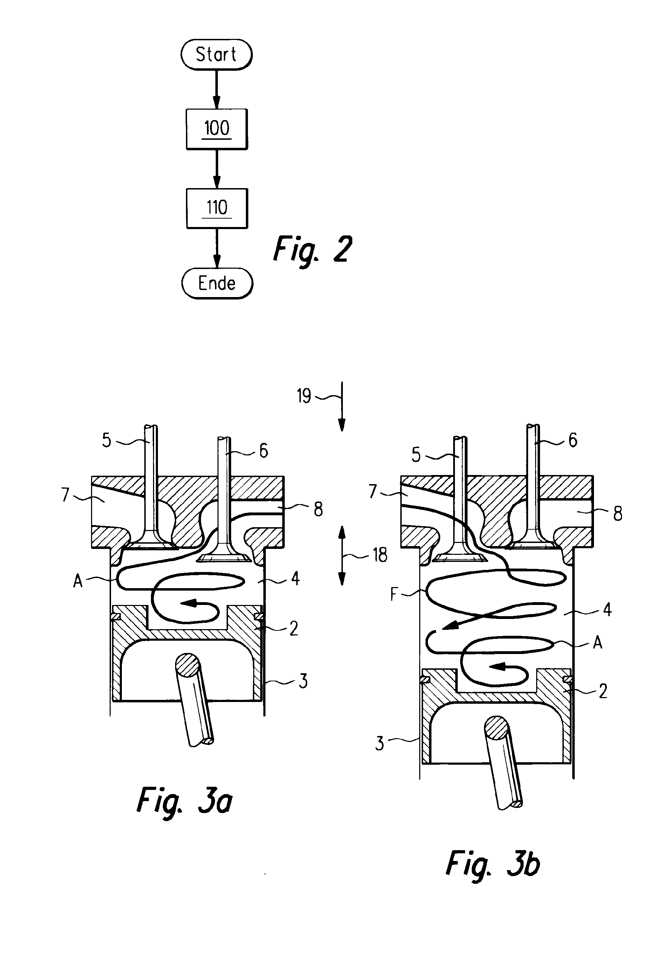

Dieser Prozess ist nachfolgend anhand des Flussdiagramms in Fig. 2 und der Figuren 3a und 3b erläutert.

Zu Beginn des erfindungsgemäßen Betriebsverfahrens befindet sich der Kolben 2 (Fig. 3a) am Anfang eines neuen Ansaugtaktes, bei dem das Auslassventil 6 geöffnet ist, so dass Abgas A aus dem Abgasrohr 8 in den Brennraum 4 angesaugt wird. Dieser Vorgang ist durch Schritt 100 in Fig. 2 verdeutlicht.

Gemäß Fig. 3a ist dabei ein Öffnungsquerschnitt im Bereich des Auslassventils 6, der den Brennraum 4 mit dem Abgasrohr 8 verbindet, derart ausgebildet, dass vom Abgasrohr 8 in den Brennraum 4 eingesogenes Abgas A einen Drall um eine Rotationsachse erhält, die sich im wesentlichen parallel zur Bewegungsrichtung 18 des Kolbens 2 erstreckt.

Dieser Drall weist gemäß dem das einströmende Abgas A symbolisierenden gewundenen Pfeil A einen Drehsinn in mathematisch positiver Richtung, d.h. gegen den Uhrzeigersinn auf, bezogen auf die in Fig. 3a, 3b von oben nach unten gerichtete Blickrichtung 19.

Die Drallbildung des Abgases A kann durch bekannte Gestaltungsmaßnahmen, insbesondere durch Strömungsklappen (nicht gezeigt) bzw. Stege (nicht gezeigt) im Bereich des Auslassventils 6 sowie durch eine speziell geformte Mulde in einer Stirnfläche des Kolbens 2 gefördert werden. Auch ein Maskieren des Auslassventils 6, d.h. eine Veränderung eines Öffnungsquerschnitts des Ventilspalts, ist zur Förderung der Drallbildung geeignet. Hierbei wird der Öffnungsquerschnitt des Ventilspalts vorzugsweise in nicht rotationssymmetrischer Weise verändert, bspw. durch Verdecken eines Teils des Ventilspalts, um eine Drallbildung zu verstärken.

Erfindungsgemäß kann die Drallbildung bei Zylindern mit mehreren Auslassventilen (nicht gezeigt) auch durch unterschiedliches Ansteuern der mehreren Auslassventile bewirkt werden, beispielsweise durch Öffnen nur eines von mehreren Auslassventilen.

Nachdem eine ausreichende Menge Abgas A (Fig. 3a) in den Brennraum 4 des Zylinders 3 eingeströmt ist, wird das Auslassventil 6, wie in Figur 3b abgebildet, geschlossen, und dass Einlassventil 5 öffnet sich.

Infolgedessen wird im weiteren Verlauf des Ansaugtakts des Zylinders 3 nunmehr Frischgas F durch das Einlassventil 5 in den Brennraum 4 angesogen. Dies erfolgt gemäß Figur 3b analog zum Ansaugen 100 (Fig. 2) des Abgases A derart, dass das Frischgas F beim Einströmen 110 (Fig. 2) in den Brennraum 4 mit einem Drall beaufschlagt wird, der denselben Drehsinn aufweist, wie der Drall des Abgases A. D.h. im vorliegenden Fall weist auch das einströmende Frischgas F einen Drall mit mathematisch positivem Drehsinn auf, bezogen auf die Blickrichtung 19.

Hierdurch ist eine geringstmögliche Vermischung des als Inertgas bezüglich einer Verbrennung im Brennraum 4 fungierenden Abgases A mit dem Frischgas F gewährleistet, wodurch insbesondere sichergestellt wird, dass nach einer in Figur 3a, 3b nicht dargestellten Einspritzung einer Kraftstoffmenge in das Frischgas F die Zündfähigkeit eines sich sodann im Bereich des Einspritzventils 9 (Fig. 1) bzw. der Zündkerze 10 einstellenden Frischgas-/Kraftstoffgemisches nicht beeinträchtigt wird.

Die Drallbildung bei dem Frischgas F kann mit denselben Mitteln wie bei der Drallbildung des Abgases A erfolgen.

Insgesamt ist es für die erfindungsgemäße Ladungsschichtung besonders wichtig, dass sowohl das Abgas A und das Frischgas F einen Drall mit demselben Drehsinn erhalten. Ob dieser Drehsinn Uhrzeiger- oder Gegenuhrzeigersinn aufweist, ist für die Stabilität der Ladungsschichten unerheblich, hängt aber von einer Geometrie des Brennraums und der Anordnung der Einlassventile bzw. Auslassventile sowie zusätzlicher drallfördernder Mittel wie z.B. Strömungsklappen usw. ab.

## Patentansprüche

1. Verfahren zum Betreiben einer Brennkraftmaschine (1) mit Ladungsschichtung in einem Brennraum (4) der Brennkraftmaschine (1), bei dem Abgas (A) in den Brennraum (4) zurückgeführt wird, **gekennzeichnet durch** ein Einbringen (100) von Abgas (A) in den Brennraum (4) während eines ersten Zeitraumes und ein Einbringen (110) von Frischgas (F) während eines zweiten Zeitraumes, der von dem ersten Zeitraum im Wesentlichen verschieden ist.

2. Verfahren nach Anspruch 1, **dadurch gekennzeichnet, dass** das Abgas (A) beim Einbringen (100) in den Brennraum (4) einen Drall um eine Rotationsachse erhält, die sich im Wesentlichen parallel zur Bewegungsrichtung (18) eines sich im Brennraum (4) hin- und herbewegenden Kolbens (2) erstreckt

3. Verfahren nach Anspruch 1 oder 2, **dadurch gekennzeichnet, dass** das Frischgas (F) beim Einbringen (110) in den Brennraum (4) einen Drall um eine Rotationsachse erhält, die sich im Wesentlichen parallel zur Bewegungsrichtung (B) eines sich im Brennraum (4) hin-und herbewegenden Kolbens (2) erstreckt.

4. Verfahren nach Anspruch 2 oder 3, **dadurch gekennzeichnet, dass** der Drall des Abgases (A) denselben Drehsinn aufweist, wie der Drall des Frischgases (F).

5. Verfahren nach einem der vorstehenden Ansprüche, **gekennzeichnet durch** ein Einbringen (110) eines Gemisches aus Frischgas (F) und Kraftstoff während des zweiten Zeitraums.

6. Verfahren nach einem der vorstehenden Ansprüche, **dadurch gekennzeichnet, dass** das Abgas (A) durch mindestens ein Auslassventil (6) der Brennkraftmaschine (1) in den Brennraum (4) eingebracht wird.

7. Verfahren nach Anspruch 6, **dadurch gekennzeichnet, dass** der Drall des Abgases (A) bei einem Zylinder (3) mit mehreren Auslassventilen (6) durch eine vorzugsweise unterschiedliche Ansteuerung der mehreren Auslassventile (6) erzeugt wird.

8. Verfahren nach Anspruch 6 oder 7, **dadurch gekennzeichnet, dass** der Drall des Abgases (A) durch ein Maskieren mindestens eines Auslassventils (6) erzeugt wird.

9. Verfahren nach einem der Ansprüche 2 bis 8, **dadurch gekennzeichnet, dass** der Drall des Frischgases (F) oder des Gemisches aus Frischgas (F) und Kraftstoff durch ein Maskieren mindestens eines Einlassventils (5) der Brennkraftmaschine (1) und/oder bei einem Zylinder (4) mit mehreren Einlassventilen (5) durch eine vorzugsweise unterschiedlich Ansteuerung der mehreren Einlassventile (5) erzeugt wird.

10. Brennkraftmaschine (1) mit Ladungsschichtung in einem Brennraum (4), bei der Abgas (A) in den Brennraum (4) zurückführbar ist, **dadurch gekennzeichnet, dass** während eines ersten Zeitraumes Abgas (A) in den Brennraum (4) einbringbar ist, und dass während eines zweiten Zeitraumes, der von dem ersten Zeitraum im Wesentlichen verschieden ist, Frischgas (F) in den Brennraum (4) einbringbar ist.

11. Steuergerät (15) für eine Brennkraftmaschine (1) mit Ladungsschichtung in einem Brennraum (4), bei der Abgas (A) in den Brennraum (4) zurückführbar ist, **dadurch gekennzeichnet, dass** während eines ersten Zeitraumes Abgas (A) in den Brennraum (4) einbringbar ist, und dass während eines zweiten Zeitraumes, der von dem ersten Zeitraum im Wesentlichen verschieden ist, Frischgas (F) in den Brennraum (4) einbringbar ist.

12. Computerprogramm für ein Steuergerät (15) einer Brennkraftmaschine (1) mit Ladungsschichtung in einem Brennraum (4), bei der Abgas (A) in den Brennraum (4) zurückführbar ist, **dadurch gekennzeichnet, dass** während eines ersten Zeitraumes Abgas (A) in den Brennraum (4) einbringbar ist, und dass während eines zweiten Zeitraumes, der von dem ersten Zeitraum im Wesentlichen verschieden ist, Frischgas (F) in den Brennraum (4) einbringbar ist.

13. Computerprogramm nach Anspruch 12, **dadurch gekennzeichnet, dass** das Computerprogramm auf einem elektrischen Speichermedium, insbesondere auf einem Flash-Memory oder einem Read-Only-Memory abgespeichert ist.
